# EUROPEAN PATENT SPECIFICATION

(11) **EP 0 780 788 B1**
(45) Date of publication and mention of the grant of the patent: **14.07.2004**
(21) Application number: 96650056.3
(22) Date of filing: 17.12.1996
(51) Int. Cl.: G06K 15/00, G07G 5/00, B41F 13/58, H04N 1/387

(54) **A process for producing retail till rolls**
Produktionsverfahren für Registrierkassenrollen
Procédé de production de rouleaux pour caisse enregistreuse

(30) Priority: 19.12.1995 IE 950957
(43) Date of publication of application: 25.06.1997
(73) Proprietor: Shop-a-Docket Limited, Dublin 2 (IE)
(72) Inventor: Conneely, Sean, Lucan, County Dublin (IE); Anderson, Karl, Castleknock, Dublin 15 (IE)
(74) Representative: Weldon, Michael James

(56) References cited:
- EP-A- 0 120 470
- EP-A- 0 558 008
- DE-A- 3 236 818
- US-A- 3 971 279
- US-A- 4 338 636
- US-A- 4 817 949

## Description

The invention relates to a process for producing till rolls which are pre-printed with advertising matter such as vouchers or dockets. In this specification, the term "till roll" is intended to cover rolls for printing receipts, also referred to as cash register receipt rolls.

More particularly, the invention relates to a process for producing pre-printed retail till rolls comprising the steps of:-
an image processor generating image cycles for till rolls and producing a colour separation file comprising a plurality of image cycles; and
printing a web using a printing plate produced from the colour separation file, tensioning the printed web, cutting the web into lengths matching the image cycles, and taking up the lengths onto cores to form till rolls.

The production of such till rolls has taken place for some time in several countries and is recognised as an established marketing medium. It is used as a means of delivering purchase incentives directly into the hands of shoppers to promote other local businesses. Where volumes are very high and till rolls to be produced are uniform, the unit cost can be kept sufficiently low using conventional pre-press and printing/spooling techniques. However, it has generally been regarded as a good commercial objective to supply pre-printed till rolls to retail outlets where the vouchers which are pre-printed relate to the specific area in which the retail outlet is located. It has also been regarded as commercially desirable to supply till rolls to a wide variety of different retail outlets having cash registers which require rolls of different widths. However, it has not been regarded as being commercially viable to achieve these commercial objectives because of the extremely complex nature of the technical operations which are required.

EP-A-0120470 discloses a device for positioning of cutter blades for cutting a paper roll in a printing machine. DE-A-3236818 describes a method for production of puzzle parts printed on retail till rolls. US-A-4817949 discloses ATM transaction receipts having a game printed on the back side of the receipts.

The invention is directed towards providing a complete process for producing retail till rolls in a manner whereby a variety of different roll sizes are produced and a wide variety of different advertising matter is pre-printed so that the till rolls apply to the particular area in which a retail outlet is located and the different cash registers.

The invention is characterised in that:
the colour separation file is produced by:-
   image processor storing a memory structure column of cells for each category of roll to be produced, the categories being associated with printing to be carried out,
   a production controller storing a memory structure array comprising all of the cell columns consolidated together, and linking each cell with a production record in memory,
   scanning an image at a scanner, and the image processor processing the outputted raster file, linking it with a cell, and storing in that cell a positive flag indicating that an associated image has been scanned and processed,
   the production controller dynamically monitoring the image processor cell column and updating the array with positive flags,
   the image processor subsequently receiving and processing raster files for remaining cells of the cell column until all cells have a positive flag,
   the image processor generating a till roll image cycle by aligning all images associated with a cell column and, using received till roll width data, reducing the image scale to that of the narrowest till roll if this is smaller than the image scale and duplicating selected images at an extremity of the aligned images until they have a pre-determined minimum till roll image cycle length,
   repeating the image cycle processing operations until an image cycle has been generated for each roll size in that category,
   repeating the image processing operations to generate an image cycle for all roll sizes in all categories,
   the image processor producing the colour separation file comprising a plurality of image cycles in side-by-side relationship, and
   producing a printing plate for the colour separation file; and
the printing and cutting steps further comprising:-
   applying an end-of-roll colour indicia at the trailing end of a till roll length, the colour also indicating the roll category and size, and
   sorting the till rolls according to the colour indicia.

Preferably, the web is cut into lengths by matching the image cycles with cutting blades to provide a margin of in excess of 4mm on a roll.

In one embodiment, the image processor generates trim mark image data in the colour separation file for reference in alignment of cutting blades.

Preferably, the image processor generates a colour separation file by determining the number of till rolls required for each size and category and aligning image cycles according to the web length and width.

In another embodiment, the production controller captures the image associated with each production record and automatically enlarges the scale and transmits it together with production data to a remote location for proofing of the image before production of the printing plate.

In one embodiment, the production controller automatically updates the array with data indicating current status, said data being captured from the associated production records.

In a further embodiment, the image processor generates a unique address for each cell according to relative location of the cell in the column, time the spool is to be produced and distributed and sequential order of insertion of a positive flag in the production controller array.

The invention will be more clearly understood from the following description of some embodiments thereof, given by way of example only with reference to the accompanying drawings in which:-
Fig. 1 is a flow-chart illustrating a process of the invention for producing retail till rolls;
Fig. 2 is a diagrammatic representation of pre-press equipment used in the process;
Fig. 3 is a plan view of a printing plate which is produced; and
Fig. 4(a) is a diagrammatical view showing a spooling operation of the process, and Fig. 4(b) is a front view showing a spool identification operation.

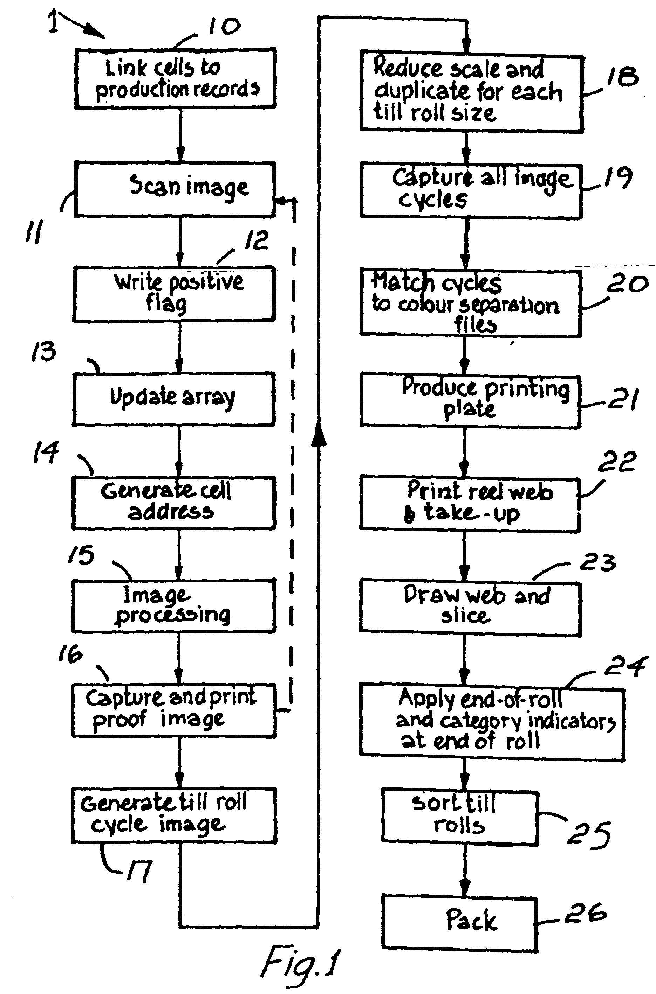

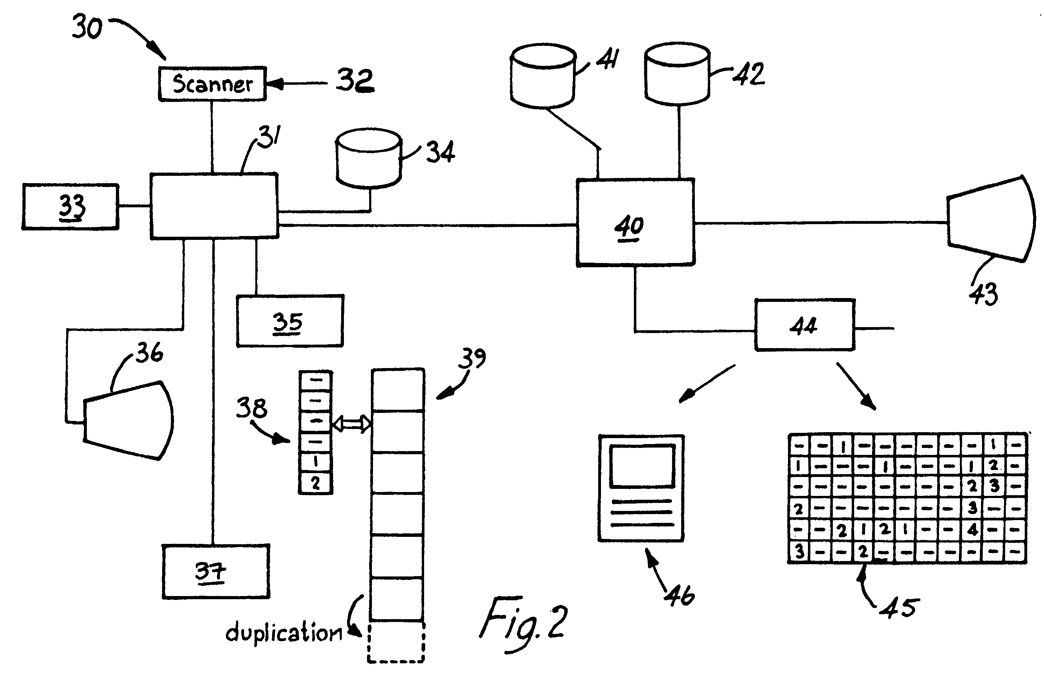

Referring to the drawings, Fig. 1 is a flow-chart illustrating a process 1 of the invention for producing till rolls. A pre-press system 30 is shown in Fig. 2. Before describing the process in detail, the pre-press system 30 is now briefly described. An image processor 31 is connected to a scanner 32 of the EPSON GT 6500 type. The image processor 31 is also connected to a database 34 of image files and to a high-resolution colour display screen 36 having a resolution of 360 d.p.i. The image processor 31 is also connected to a memory 35 and to a printer 37.

A production controller 40 is connected to the image processor 31 and comprises a CPU programmed to interface with the image processor 31. The production controller 40 is also programmed to maintain production records and to generate data for transmission to advertising clients. The production controller 40 is connected to a database 41 of till roll and reel technical data, to a database 42 of production records of client data and to a high-resolution screen 43. The production controller 40 is also connected to a printer 44.

The process of the invention is set out in Fig. 1 as a sequence of steps 10 to 26 inclusive. In step 10 the image processor 31 stores a memory structure column of cells for each category of roll to be produced. There is a category for each different set of advertising indicia to be printed. Each cell in a column relates to a particular image, as described below. Within each category, there may be a number of different till roll sizes such as 37mm, 44mm and 70mm widths.

The production controller 40 stores all of the cell columns consolidated together as a memory structure production control array. In Fig. 2, a production control array 45 is shown which comprises in this embodiment twenty columns 38 (only some of which are illustrated) consolidated together to form the array. Accordingly, the array 45 provides a means for monitoring and controlling all categories of rolls to be produced. There is a column 38 for each geographical supply region, and accordingly if more than twenty regions are covered, the array 45 will be correspondingly larger.

Each cell of each column 38 is associated with an image and with a production record in a one-to-one relationship.

The till rolls are printed with cycles of images repeated along the length of the roll. Each image may, for example, be a voucher for the advertising company (client). Each cell column 38 is associated with one image cycle, each cell being associated with one image within the cycle, and with one production record.

In step 11, an image is scanned at the scanner 32 and the image processor 31 links the outputted raster file with a particular cell of a column 38. The raster file is stored in the image memory 35 and is then processed by modification of the scanned image and by addition of other matter such as text. Once an image has been scanned and processed and a modified raster file stored, the image processor 31 writes a positive flag in the associated cell. The image processor 31 also dynamically maintains a count on cells which do not have a positive flag and in the example shown in Fig. 2 the last two cells do not have a flag and are indicated by the numerals 1 and 2. The object is to reach the stage where there is a flag in every cell, at which stage all "spaces" on a till roll category are booked by advertisers. The production controller 40 dynamically monitors the status of the stored cell columns 38 and updates the array 45 accordingly in step 13 and generates production status output signals.

The production controller 40 receives business-related data associated with the image such as account data, address of the advertising client, etc. and writes this to the associated production record in the database 42. A unique address is generated by the production controller 40, the address applying to the production record and the associated image file on the image processor 31 and to the relevant cell in the cell column 38. The unique address is a combination of an identifier of the cell, the time period for printing and distribution of the rolls, and a number indicating the sequence in which the image was received in the context of the full production array 45. The steps of writing the positive flag, updating the array and generating the cell address are indicated by the numerals 12, 13 and 14 in Fig. 1.

In step 15 the image processor 31 carries out any further image processing of the raster file. In this embodiment, the raster file is two bytes deep for representation of two colours. The level of image processing required depends on the quality of the original image which was scanned and on the level of editing required by the client.

In step 16 the production controller 40 captures the processed image and prints a proof image sheet 46 together with various production data to allow approval of the image by the client.

Steps 11 to 16 are repeated for each cell of the column 38 until all cells have a positive flag and the images have been processed. When approval of an image is received from the client, this fact is written to the relevant production record in the database 42.

In step 17 the image processor 40 generates a till roll image cycle by aligning all images associated with a particular cell column. This is performed under instruction from an operator while viewing all of the images on a single screen at a reduced scale so that all of the image cycle may be viewed together. The image processor 31 retrieves till roll data from the database 41 and subsequently reduces the image scale until the width of the image corresponds to that required for the narrowest till roll (usually 37 mm) for the category. In some cases, it may not be necessary to reduce the scale as the till roll size required corresponds with the image scale. Scale reduction results in a reduction in the vertical direction also and in order to achieve a pre-determined minimum length for an image cycle the image processor 31 duplicates one or more selected images and appends them to the end, as shown in Fig. 2 for an image cycle 39. This results in some images being repeated within a single image cycle. This technical feature provides a good deal of commercial versatility. For the larger roll widths (44 and 70 mm) in the category there is no need to reduce the scale and duplicate any images. These operations are indicated by the steps 17 and 18 in Fig. 1 and are repeated until there is a image cycle for every roll size in every category. In this embodiment there are twenty categories and there may be up to three sizes within each category.

In step 19 the production controller 40 captures all of the image cycles and writes them then to a storage device. In step 20 the image processor 31 matches image cycles to colour separation files. To do this, it captures from the production records 42 and from the roll records 41 such important criteria as the widths of the web on the reel to be printed, the length of the web (10,000 metres or 15,000 metres), the margins to be used on the till rolls (a minimum of 4mm), the number of till rolls of each size and categories which are required, etc. In performing these matching operations, the minimum unit of production for each size and category of till roll is the length of the web on the printing reel divided by the length of the till roll. For example, if the reel is 10,000 metres long and the till roll is 100 metres long, then the minimum number of till rolls for that size and category will be 1000. An important aspect of production of the colour separation file is that image cycles are repeated across the file according to the number of units of production required.

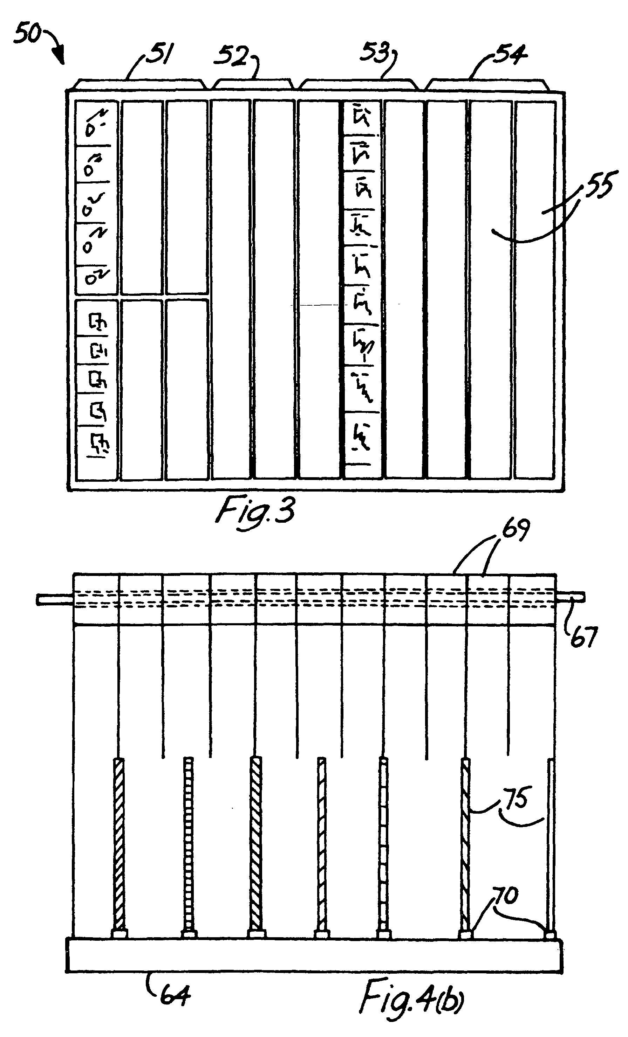

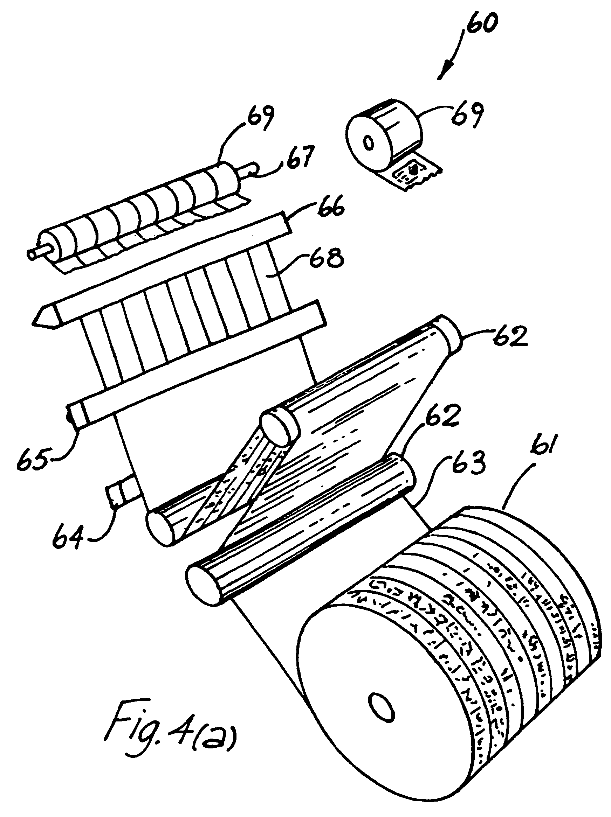

In step 21 a printing plate is produced according to the colour separation file, a printing plate 50 being shown in Fig. 3. As shown in Fig. 3, the printing plate 50 has a relatively short image cycle which fits twice lengthwise onto the printing plate and is repeated three times across for three minimum production units. This set is indicated by the numeral 51. There are also sets 52, 53 and 54, determined according to the production requirements. It will be appreciated from this drawing that there is maximum utilization of the web and the printing equipment, although control of the subsequent spooling operations is more difficult that has heretofore been the case because different till rolls will be produced from a single reel.

In step 22 the reel web is printed using the printing plate 50 and is taken up onto a take-up reel.

Referring now to Figs. 4(a) and 4(b) a spooling apparatus 60 is shown in operation. A printed reel 61 is rotatably mounted and a web 63 is drawn around tensioning rollers 62 and past an indicating bar 64, described in more detail below. The web 63 is then cut longitudinally by blades 65, and is finally cross-cut by a blade 66 after eleven rolls 69 have been taken up on cores mounted on a shaft 67.

The marking bar 64 moves in and out of the plane of the web and carries ink applicators 70, some of which are aligned with longitudinal cutting blades 65. Individual ink applicators 70 are used as illustrated to mark the web with lines 75 so that a coded mark appears on the lengths 68, each length being for an individual till roll. It will be appreciated that this is an extremely simple and effective manner of allowing the till rolls to be sorted in step 25 after the lengths 68 have been taken-up onto the individual spools 69. While this may appear to be a very simple part of the process, it is very important as it ensures that till rolls are sorted and delivered to the correct premises, something which must always be correct.

In setting up the apparatus 60, the cutting blades are aligned with trim mark images which are included in the image cycle to define a margin in excess of 4mm between the edge of the image cycle and the till roll.

It will be appreciated that the invention provides for production of a wide variety of different categories of till roll in which there are different sizes of roll within each category. The manner in which the image cycles are generated provides for achieving a uniform length of image cycle irrespective of the till roll width in a very simple manner. Further, production status can be monitored in an extremely effective manner by linking of production data with the cells, and in turn with the production control array 45. It has been found that by applying the process of the invention, it is possible to provide advertisers with the opportunity to select one or more of, for example, twenty different geographical regions into which they could have their purchase incentive circulated for a specified period. The technical features of the invention allow such a comprehensive and complex service to be provided in a manner which is commercially viable.

The invention is not limited to the embodiments hereinbefore described, but may be varied in construction and detail.

## Claims

1. A process (1) for producing pre-printed retail till rolls (60) comprising the steps of:-
an image processor (31) generating image cycles for till rolls and producing a colour separation file comprising a plurality of image cycles; and
printing a web using a printing plate (50) produced from the colour separation file, tensioning the printed web (63), cutting the web (63) into lengths (68) matching the image cycles, and taking up the lengths (68) onto cores (67) to form till rolls (60),
**characterised in that**,
the colour separation file is produced by:-
the image processor (31) storing a memory structure column of cells for each category of roll to be produced, the categories being associated with printing to be carried out,
a production controller (40) storing a memory structure array (45) comprising all of the cell columns (38) consolidated together, and linking each cell with a production record in memory (42),
scanning (11) an image at a scanner (32), and the image processor (31) processing the outputted raster file, linking it with a cell, and storing **in that** cell a positive flag indicating that an associated image has been scanned and processed,
the production controller (40) dynamically monitoring the image processor cell column (38) and updating the array with positive flags,
the image processor subsequently receiving and processing raster files for remaining cells of the cell column (38) until all cells have a positive flag,
the image processor generating (17) a till roll image cycle by aligning all images associated with a cell column and, using received till roll width data, reducing the image scale to that of the narrowest till roll if this is smaller than the image scale and duplicating selected images at an extremity of the aligned images (39) until they have a pre-determined minimum till roll image cycle length,
repeating the image cycle processing operations until an image cycle has been generated for each roll size **in that** category,
repeating the image processing operations to generate an image cycle for all roll sizes in all categories,
the image processor (31) producing the colour separation file comprising a plurality of image cycles in side-by-side relationship, and
producing a printing plate for the colour separation file, and
the printing and cutting steps further comprising:-
applying an end-of-roll colour indicia at the trailing end of a till roll length, the colour also indicating the roll category and size, and
sorting the till rolls according to the colour indicia.

2. A process as claimed in claim 1, wherein the web is cut into lengths by matching the image cycles with cutting blades (70) to provide a margin of in excess of 4mm on a roll.

3. A process as claimed in claim 2, wherein the image processor (31) generates trim mark image data in the colour separation file for reference in alignment of cutting blades.

4. A process as claimed in any preceding claim, wherein the image processor generates a colour separation file by determining the number of till rolls required for each size and category and aligning image cycles according to the web length and width.

5. A process as claimed in any preceding claim, wherein the production controller captures the image associated with each production record and automatically enlarges the scale and transmits it together with production data to a remote location for proofing of the image before production of the printing plate.

6. A process as claimed in claim 5, wherein the production controller automatically updates the array with data indicating current status, said data being captured from the associated production records.

7. A process as claimed in any preceding claim, wherein the image processor generates a unique address for each cell according to relative location of the cell in the column, time the spool is to be produced and distributed and sequential order of insertion of a positive flag in the production controller array.

## Patentansprüche

1. Verfahren (1) zum Herstellen vorgedruckter Einzelhandelskassenrollen (60), das die folgenden Schritte aufweist:
Erzeugen von Bildzyklen für Kassenrollen und Herstellen einer Farbtrenndatei, die eine Mehrzahl von Bildzyklen aufweist, durch einen Bildprozessor (31), und
Bedrucken einer Bahn unter Verwendung einer Druckplatte (50), die von der Farbtrenndatei erzeugt wird, Spannen der bedruckten Bahn (63), Schneiden der Bahn (63) in Stücke (68), die zu den Bildzyklen passen, und Aufnehmen der Stücke (68) auf Kerne (67) zum Bilden von Kassenrollen (60),
**dadurch gekennzeichnet, dass**
die Farbtrenndatei erzeugt wird durch:
Speichern einer Speicherstruktursäule von Zellen für jede herzustellende Rollenkategorie durch den Bildprozessor (31), wobei die Kategorien mit durchzuführendem Drucken verknüpft sind,
Speichern eines Speicherstrukturmatrixfelds (45), welches alle der Zellenspalten (38) zusammengeschlossen aufweist, und Verknüpfen jeder Zelle mit einer Produktionsdatei im Speicher (42) durch eine Produktionssteuerung (40),
Abtasten (11) eines Bildes an einem Scanner (32), und Verarbeiten der ausgegebenen Rasterdatei, Verknüpften derselben mit einer Zelle und Speichern durch den Bildprozessor (31) eines positiven Merkers in dieser Zelle, der anzeigt, dass ein zugehöriges Bild abgetastet und verarbeitet wurde,
dynamisches Überwachen der Bildprozessor-Zellenspalte (38) und Aktualisieren des Matrixfelds mit positiven Merkern durch die Produktionssteuerung (40), anschließendes Erhalten und Verarbeiten von Rasterdateien für die restlichen Zellen der Zellenspalte (38) durch den Bildprozessor, bis alle Zellen einen positiven Merker aufweisen,
Erzeugen (17) eines Kassenrollen-Bildzyklus durch Ausrichten aller mit einer Zellenspalte verknüpften Bilder, und, unter Verwendung erhaltener Kassenrollen-Breitendaten, Reduzieren des Bildmaßstabs auf den der schmalsten Kassenrolle, wenn dieser kleiner als der Bildmaßstab ist, und Duplizieren ausgewählter Bilder an einer Extremität der ausgerichteten Bilder (39) durch den Bildprozessor, bis sie eine vorbestimmte minimale Kassenrollen-Bildzykluslänge aufweisen,
Wiederholen der Bildzyklus-Verarbeitungsoperationen, bis ein Bildzyklus für jede Rollengröße in dieser Kategorie erzeugt wurde,
Wiederholen der Bildverarbeitungsoperationen zum Erzeugen eines Bildzyklus für alle Rollengrößen in allen Kategorien,
Erzeugen der Farbtrenndatei durch den Bildprozessor (31), die eine Mehrzahl von Bildzyklen in nebeneinanderliegendem Verhältnis aufweist, und
Herstellen einer Druckplatte für die Farbtrenndatei, und
wobei die Druck- und Schneideschritte weiter aufweisen:
Aufbringen eines das Ende einer Rolle anzeigenden Farbindizes am Hinterende eines Kassenrollenstücks, wobei die Farbe auch die Rollenkategorie und Größe anzeigt; und
Sortieren der Kassenrollen gemäß den Farbindizes.

2. Verfahren nach Anspruch 1, bei dem die Bahn durch Zusammenpassen der Bildzyklen mit Schneidklingen (70) in Stücke geschnitten wird, um einen Rand über 4 mm an einer Rolle vorzusehen.

3. Verfahren nach Anspruch 2, bei dem der Bildprozessor (31) Abschneidmarkierungsbilddaten in der Farbtrenndatei für Bezugnahme bei Ausrichtung der Schneidklingen erzeugt.

4. Verfahren nach einem vorhergehenden Anspruch, bei dem der Bildprozessor eine Farbtrenndatei durch Bestimmung der Anzahl von Kassenrollen, die für jede Größe und Kategorie benötigt werden, und durch Ausrichtung von Bildzyklen gemäß der Bahnlänge und Breite erzeugt.

5. Verfahren nach einem vorhergehenden Anspruch, bei dem die Produktionssteuerung das mit jeder Produktionsdatei verknüpfte Bild erfasst und automatisch den Maßstab vergrößert und es zusammen mit Produktionsdaten zu einer entfernten Position zum Nachweisen des Bilds vor Herstellung der Druckplatte überträgt.

6. Verfahren nach Anspruch 5, bei dem die Produktionssteuerung automatisch das Matrixfeld mit den aktuellen Status anzeigenden Daten aktualisiert, wobei die genannten Daten von den zugehörigen Produktionsdateien erfasst werden.

7. Verfahren nach einem vorhergehenden Anspruch, bei dem der Bildprozessor eine eindeutige Adresse für jede Zelle gemäß der relativen Stellung der Zelle in der Säule, der Zeit, wenn die Spule zu erzeugen und verteilen ist, und der sequentiellen Reihenfolge der Einfügung eines positiven Merkers in das Produktionssteuerungsmatrixfeld erzeugt.

## Revendications

1. Un processus (1) destiné à produire des rouleaux de caisse enregistreuse pré-imprimés (60) comprenant les étapes suivantes :
un processeur d'image (31) générant des cycles d'images pour rouleaux de caisse enregistreuse et produisant un fichier de séparation des couleurs comprenant une pluralité de cycles d'images et
impression d'une bande en utilisant une plaque d'impression (50) produite à partir du fichier de séparation des couleurs, tensionnement de la bande d'impression (63), découpage de la bande (63) en laizes (68) correspondant aux cycles d'images et enroulement des laizes (68) sur des mandrins (67) pour constituer les rouleaux de caisse enregistreuse (60),
**caractérisé par le fait que**
le fichier de séparation des couleurs est produit par :
le processeur d'image (31) enregistrant une colonne de structure de mémoire de cellules pour chaque catégorie de rouleau à produire, les catégories étant associées à la tâche d'impression à réaliser,
un contrôleur de production (40) enregistrant une matrice de structure de mémoire (45) comprenant toutes les colonnes de cellules (38) fusionnées et reliant chaque cellule à un dossier de production placé en mémoire (42),
la numérisation (11) d'une image par un scanner (32) et le processeur d'image (31) traitant le fichier de données tramées produit, le reliant à une cellule et enregistrant dans cette cellule une balise positive indiquant qu'une image associée a été numérisée et traitée,
le contrôleur de production (40) surveillant dynamiquement la colonne de cellule (38) du processeur d'image et actualisant la matrice avec des balises positives,
le processeur d'image recevant et traitant subséquemment les fichiers de données tramées à la recherche des cellules restantes dans la colonne de cellules (38) jusqu'à ce que toutes les cellules aient une balise positive,
le processeur d'image générant (17) un cycle d'images de rouleau de caisse enregistreuse en alignant toutes les images associées à une colonne de cellule et, en utilisant les données de largeur de rouleau de caisse enregistreuse reçues, ramenant la taille de l'image à celle du rouleau de caisse enregistreuse le plus étroit si celle-ci est inférieure à la taille de l'image et dupliquant des images sélectionnées à une extrémité des images alignées (39) jusqu'à ce qu'elles aient une longueur de cycle d'images de rouleau de caisse enregistreuse minimale prédéterminée,
la répétition des opérations de traitement du cycle d'images jusqu'à ce qu'un cycle d'images ait été généré pour chaque taille de rouleau dans cette catégorie,
la répétition des opérations de traitement d'image pour générer un cycle d'images pour toutes les tailles de rouleau de toutes les catégories,
le processeur d'image (31) produisant le fichier de séparation des couleurs comprenant une pluralité de cycles d'images en relation de juxtaposition et,
la production d'une plaque d'impression pour le fichier de séparation des couleurs, et
les étapes d'impression et de découpage comprenant également :
l'application d'étiquettes de couleur de fin de rouleau à l'extrémité arrière d'une laize de rouleau de caisse enregistreuse, la couleur indiquant également la catégorie et la taille du rouleau, et
le tri des rouleaux de caisse enregistreuse en fonction des étiquettes de couleur.

2. Un processus selon la Revendication 1 où la bande est découpée en laizes en appariant les cycles d'images avec des lames de coupe (70) de façon à fournir une marge supérieure à 4 mm par rouleau.

3. Un processus selon la Revendication 2 où le processeur d'image (31) génère des données d'images de repère de coupe dans le fichier de séparation des couleurs à titre de référence pour l'alignement des lames de coupe.

4. Un processus selon l'une quelconque des Revendications ci-dessus où le processeur d'image génère un fichier de séparation des couleurs en déterminant le nombre de rouleaux de caisse enregistreuse nécessaires pour chaque taille et catégorie et en alignant les cycles d'images en fonction de la longueur et de la largeur de la bande.

5. Un processus selon l'une quelconque des Revendications ci-dessus, où le contrôleur de production extrait l'image associée à chaque dossier de production et automatiquement augmente la taille et la transmet conjointement avec les données de production vers un site distant pour vérification de l'épreuve de l'image avant la production de la plaque d'impression.

6. Un processus selon la Revendication 5 où le contrôleur de production actualise automatiquement la matrice avec des données indiquant l'état en cours, les dites données étant extraites des dossiers de production associés.

7. Un processus selon l'une quelconque des Revendications ci-dessus, où le processeur d'image génère une adresse unique pour chaque cellule en fonction de la position relative de la cellule dans la colonne, de l'heure à laquelle la bobine doit être produite et distribuée et de l'ordre séquentiel d'insertion d'une balise positive dans la matrice d'un contrôleur de production.
